(19) **Europäisches Patentamt**

**European Patent Office**

**Office européen des brevets**

(11) **EP 1 653 640 A1**

(12) **EUROPEAN PATENT APPLICATION**
published in accordance with Art. 158(3) EPC

(43) Date of publication:
**03.05.2006 Bulletin 2006/18**

(21) Application number: **04747308.7**

(22) Date of filing: **09.07.2004**

(51) Int Cl.:
**H04B 10/18** (1990.01)

(86) International application number:
**PCT/JP2004/009840**

(87) International publication number:
**WO 2005/006041 (20.01.2005 Gazette 2005/03)**

(84) Designated Contracting States:
**FR**

(30) Priority: **11.07.2003 JP 2003273575**

(71) Applicant: **Sumitomo Electric Industries, Ltd.
Osaka-shi, Osaka 541-0041 (JP)**

(72) Inventors:
• **HATAYAMA, Hitoshi;
c/o Yokohama Works of Sumitomo
Kanagawa 2448588 (JP)**

• **SASAOKA, Eisuke;
c/o Yokohama Works of Sumitomo
Kanagawa 2448588 (JP)**

(74) Representative: **Kreutzer, Ulrich
Cabinet Beau de Loménie,
Bavariaring 26
80336 München (DE)**

(54) **FIBEROPTICS, FIBEROPTIC TRANSMISSION LINE AND OPTICAL TRANSMISSION SYSTEM**

(57) The present invention provides an optical transmission system and so on having a structure that enables to reduce variations between wavelengths in chromatic dispersion over a wide wavelength range and control non-linear optical effects.

An optical fiber transmission line comprises a first optical fiber having a positive chromatic dispersion such that its wavelength dependence is reduced over a wide wavelength range, and a second optical fiber having a negative chromatic dispersion such that its wavelength dependence is reduced over the wavelength range. In this way, the first and second optical fibers each have a chromatic dispersion of a different polarity, thereby controlling accumulated chromatic dispersions at low level for a whole optical fiber transmission line, while the chromatic dispersion occurs to some extent in each of the first and second optical fibers, thereby controlling effectively non-linear optical effects such as four-wave mixing.

Fig.2

**EP 1 653 640 A1**

## Description

### TECHNICAL FIELD

The present invention relates to an optical fiber, an optical fiber transmission line, and an optical transmission system that are available as an optical transmission line suitable for to an optical transmission for wavelength division multiplexing (WDM).

### BACKGROUND ART

A WDM optical transmission system is the one that transmits signal light involving a plurality of channels having different wavelengths from each other by way of an optical fiber as a transmission line, and that enables an information transmission of high speed and large capacity. Typically, a transmission fiber is an optical fiber mainly composed of silica and having the smallest transmission loss with respect to light in the 1.55 μm wavelength band. In the WDM transmission system having such an optical fiber as an optical transmission line, signal light in the 1.55 μm wavelength band is used. On the other hand, a standard single mode optical fiber having a zero dispersion wavelength in the 1.3 μm wavelength band has a positive chromatic dispersion in the 1.55 μm wavelength band. The chromatic dispersion depends greatly on wavelengths, while a waveform of the signal light is deteriorated easily when the chromatic dispersion is large. In addition, the waveform of the signal light is further deteriorated due to an interaction between the chromatic dispersion and non-linear optical phenomena.

Thus, for a conventional optical transmission system, the following dispersion flattened fiber is proposed: wavelength dependence of chromatic dispersions is reduced over a wide wavelength range, while an absolute value of the chromatic dispersions is controlled at low level, thereby suppressing waveform distortion of signal light caused by the chromatic dispersions (for instance, see Patent Documents).

Patent Document 1: U. S. Patent No. 6,169,837 B1

Patent Document 2: Japanese Patent Application Laid-Open No. 8-248251 (EP 0 724 171 A2)

### DISCLOSURE OF THE INVENTION

### PROBLEMS TO BE SOLVED BY THE INVENTION

The inventors have studied a conventional optical transmission system and a dispersion flattened fiber applied thereto in detail, and as a result, have found problems as follows.

Thus, in the WDM optical transmission, for the purpose of achieving further high-speed signal transmission, and large capacity development of information transmission, it is necessary to bring as small as possible an absolute value of an accumulated chromatic dispersion in a transmission line over a wider wavelength range. Therefore, a conventional dispersion flattened fiber is designed so that an absolute value of its chromatic dispersion is approximated to zero as nearly as possible.

However, when multiplexed WDM signal light having a plurality of channels is transmitted, in a conventional dispersion flattened fiber designed so that the absolute value of its chromatic dispersion is approximated to zero more closely, there may occur easily a non-linear optical effect, particularly four-wave mixing, resulting in providing a factor to deteriorate transmission characteristics in a whole optical fiber transmission line.

The present invention is made to solve the aforementioned problems, and it is an object to provide an optical transmission system having a structure to reduce variations between wavelengths in chromatic dispersion over a wider wavelength range and also suppress effectively a non-linear optical effect such as four-wave mixing, and to provide an optical fiber and an optical fiber transmission line applicable to this system.

### MEANS FOR SOLVING THE PROBLEM

An optical transmission system according to the present invention includes an optical fiber transmission line for transmitting signal light having a plurality of channels having different wavelengths from each other, and then this optical fiber transmission line comprises at least one pair of optical fibers having chromatic dispersions having different polarities from each other in the wavelength range of 1460 nm to 1620 nm.

In particular, optical fibers having chromatic dispersions having different signs from each other are included in the optical transmission system; with respect to any one of the optical fibers, in the wavelength range of 1460 nm to 1620 nm, the optical fiber having a chromatic dispersion whose absolute value is 5 ps/nm/km or more but 10 ps/nm/km or less and an optical property of 4 ps/nm/km or less in a difference between a maximum value and a minimum value of the chromatic dispersion in the same wavelength range, is applicable. Thus, a first optical fiber applicable as a part of the optical fiber transmission line has a dispersion versus wavelength characteristic of an upwardly convex shape in the wavelength range of 1460 to 1620 nm, and has a positive chromatic dispersion, while a second optical fiber applicable as a part of the optical fiber transmission line has a dispersion versus wavelength characteristic of an downwardly convex shape in the wavelength range, and has a negative chromatic dispersion. Specifically, the first optical fiber has a chromatic dispersion of +5 ps/nm/km or more but +10 ps/nm/km or less in the wavelength range and an optical property of 4 ps/nm/km or less in a difference between a maximum value and a minimum value of the chromatic dispersion in the wavelength range. On the other hand, the second optical fiber has a chromatic dispersion of -10 ps/nm/km or more but -5 ps/nm/km or less in the wavelength range and optical property of 4 ps/nm/km or less in a difference between a maximum value and a minimum value of the chromatic dispersion in the wavelength range. In addition, in order to reduce wavelength dependence of the chromatic dispersion, both the first and second optical fibers preferably has a dispersion slope whose absolute value is 0.02 ps/nm$^2$/km or less at the wavelength of 1550 nm.

As described above, the optical fiber transmission line (optical fiber transmission line according to the present invention) composes optical fibers having different chromatic dispersions in polarity from each other, and these optical fibers (optical fiber according to the present invention) have a larger chromatic dispersion as compared with conventional flattened fibers, while they have a smaller chromatic dispersion as compared with standard single mode optical fibers. That is, the optical fiber according to the present invention, optical fiber transmission line including the optical fiber, and further optical transmission system including the optical fiber transmission line each can reduce distortion of signal waveforms caused by an occurrence of the chromatic dispersion as compared with standard single mode optical fibers, and can also reduce wavelength dependence of the chromatic dispersion to be occurred, thereby being of extremely great value to be used as a wide range WDM optical transmission system.

In addition, in the aforementioned first and second optical fibers, in order to reduce the wavelength dependence of the chromatic dispersion more efficiently, a difference between the chromatic dispersion at the wavelength of 1460 nm (lower limit wavelength of the wavelength range) and that at the wavelength of 1620 nm (upper limit wavelength of the wavelength range) is preferably 1 ps/nm/km or less.

Each of the first and second optical fibers comprises a core region extending along a predetermined axis and a cladding region provided on an outer periphery of the core region. In particular, the core region is constructed by: a first core extending a predetermined axis, the first core region having an outer diameter 2a and a maximum refractive index $n_1$; a second core provided on an outer periphery of the first core, the second core region having an outer diameter 2b and a refractive index of $n_2$ lower than that of the first core; and a third core provided on an outer periphery of the second core, the third core region having an outer diameter 2c and a refractive index of $n_3$ higher than that of the second core. The cladding region is provided on an outer periphery of the third core, and has a refractive index of $n_4$ lower than that of the third core.

In the first and second optical fibers having the aforementioned structure, the upper limit of a relative refractive index difference $\Delta^-$ of the second core with respect to the cladding region is preferably -0.3 % or less. On the other hand, the lower limit of the relative refractive index difference $\Delta^-$ of the second core with respect to the cladding region is preferably -0.7 % or more. In addition, preferably, the first optical fiber has an effective area $A_{eff}$ 43 $\mu$m$^2$ or more at the wavelength of 1550 nm, and a relative refractive index difference $\Delta^+$ of the first core with respect to the cladding region is 0.5 % or more but 0.6 % or less. On the other hand, preferably, the second optical fiber has an effective area $A_{eff}$ of 35 $\mu$m$^2$ or more at the wavelength of 1550 nm, and a relative refractive index difference $\Delta^+$ of the first core with respect to the cladding region is 0.65 % or more but 0.80 % or less.

Note that as shown in Patent Document 2, the effective area $A_{eff}$ is provided by the following equation:

[Equation 1]

$$A_{eff} = 2\pi (\int_0^\infty E^2 r dr)^2 / (\int_0^\infty E^4 r dr)$$

where E is the electric field involved in propagation light, and r is the distance in a radius direction from the center of the core.

Further, the first optical fiber preferably has a mode field diameter of 7.5 $\mu$m to 8.5 $\mu$m at the wavelength range, preferably at the wavelength of 1550 nm.

Though an optical fiber transmission line applicable to the optical transmission system according to the present invention can be constructed by a line component unit that composes a pair of first and second optical fibers having the aforementioned structure, this optical fiber transmission line may include a plurality of line components each having the same structure as that of the above-described line component. In this case, the first optical fiber included in each of the plurality of line components preferably has a mode field diameter of 7.5μm to 8.5 μm in the wavelength range. Thus, deterioration of transmission characteristics caused by non-linear optical effects is effectively suppressed since it is possible to reduce an optical power density of propagating signal light. In addition, the optical fiber transmission line constructed by the plurality of line components may have a configuration to be arranged such that the first optical fibers included in the plurality of line components are arranged to be adjacent to each other, and that the second optical fibers included in the plurality of line components are arranged to be adjacent to each other. Thus, deterioration of transmission characteristics caused by non-linear optical effects is effectively suppressed by controlling the number of changes in polarity of the chromatic dispersion to be occurred along the longitudinal direction of the optical fiber transmission line.

## EFFECT OF THE INVENTION

As described above, in accordance with the present invention, the optical fiber transmission line comprising the first optical fiber having a positive chromatic dispersion such that its wavelength dependence is reduced over a wide wavelength range of 1460 nm to 1620 nm, and the second optical fiber having a negative chromatic dispersion such that its wavelength dependence is reduced over the wavelength range. In this way, each of the first and second optical fibers has a chromatic dispersion of a different polarity, thereby controlling accumulated chromatic dispersion at low level for a whole optical fiber transmission line, while the chromatic dispersion occurs to some extent in each of the first and second optical fibers, thereby controlling effectively non-linear optical effects such as four-wave mixing.

## BRIEF DESCRIPTION OF THE DRAWINGS

Fig. 1 is a diagram showing the constructions of an optical transmission system, a transmitting station, and a receiving station according to the present invention;

Fig. 2 is a diagram for explaining constructions of optical fiber transmission lines and chromatic dispersion characteristics in the optical transmission system according to the present invention;
Fig. 3 is a diagram for explaining other constructions of the optical fiber transmission lines in the optical transmission system according to the present invention;
Fig. 4 illustrates a sectional structure for explaining a typical structure of an optical fiber and its refractive index profile according to the present invention; and
Fig. 5 is a table listing specifications for the plurality of samples (samples No. 1 to No. 9) with respect to the optical fiber according to the present invention.

## EXPLANATION OF THE REFERENCE SYMBOLS

10...transmitting station; 20...optical fiber transmission line; 30...receiving station; 11a to 11n...transmitter; 12...multiplexer; 31...demultiplexer; 100...optical fiber; 110...core region; 120...cladding region; 32a to 32n...receiver; and 250, 350...fiber module.

## BEST MODE OF CARRYING OUT THE INVENTION

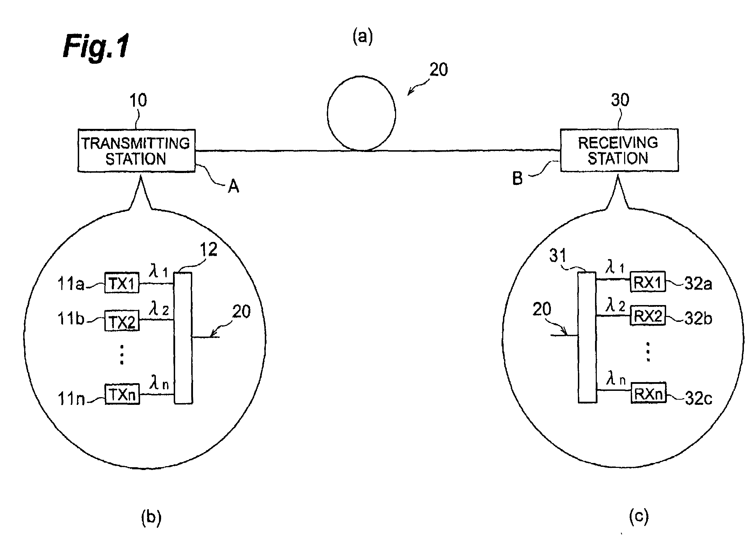

In the following, the best modes for carrying out the inventions will be explained in detail with reference to Figs. 1-5. In the explanation of the drawings, the same elements will be denoted by the same reference symbols and these redundant descriptions will be omitted.

Fig. 1 is a diagram showing the constructions of an optical transmission system, a transmitting station, and a receiving station according to the present invention. The optical transmission system, shown in the area (a) of Fig. 1, composes a transmitting station 10 for transmitting signal light, an optical fiber transmission line 20 as a transmission medium through which the signal light propagates, and a receiving station 30 for receiving the signal light. A signal input end A of the optical fiber transmission line 20 is connected to a signal output end of the transmitting station 10, while a signal output end B of the optical fiber transmission line 20 is connected to the signal input end of the receiving station 30.

As shown in the area (b) of Fig. 1, the transmitting station 10 comprises light sources (Tx1 to TXn) 11a to 11n for emitting light beams having wavelengths $\lambda_1$ to $\lambda_n$ respectively, and a multiplexer 12 for multiplexing the light beams having the wavelengths $\lambda_1$ to $\lambda_n$ emitted from the light sources 11a to 11n, and outputs the signal light (WDM signal light), where signal channels of the wavelengths $\lambda_1$ to $\lambda_n$ are multiplexed, toward the optical fiber transmission line 20.

As shown in the area (c) of Fig. 1, the receiving station 30 comprises a demultiplexer 31 for demultiplexing the signal channels of the wavelengths $\lambda_1$ to $\lambda_n$ contained in the WDM signal light which propagates through the optical transmission line 20, and optical receivers (RX1 to RXn) 32a to 32n for receiving the light beams having the wavelengths $\lambda_1$ to $\lambda_n$ and demultiplexed by the demultiplexer 31 respectively.

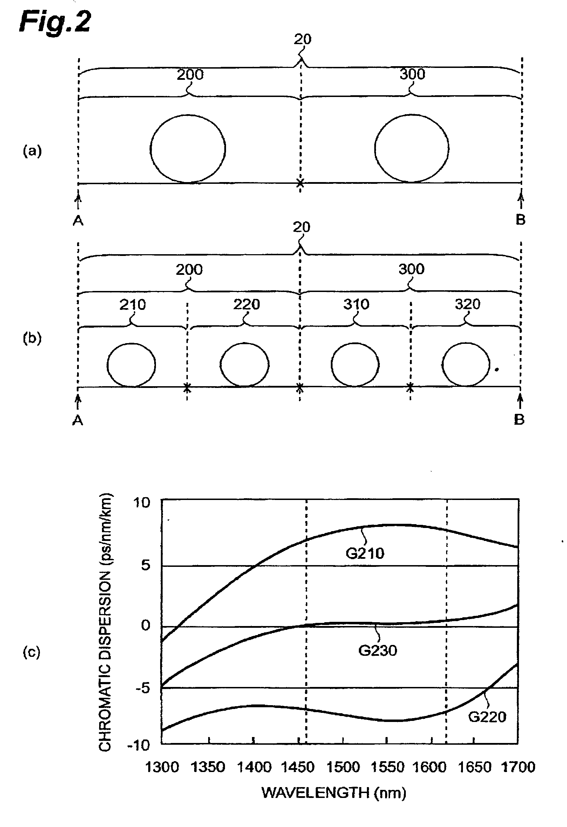

In the optical transmission system according to the present invention, the optical fiber transmission line 20 is constructed by at least one pair of optical fibers having chromatic dispersions having different polarities from each other in a wavelength range of 1460 nm to 1620 nm. For example, as shown in the area (a) of Fig. 2, the transmission line 20 has a structure such that a first optical fiber 200 having a positive chromatic dispersion in the wavelength range of 1460 nm to 1620 nm is fusion-spliced with a second optical fiber 300 having a negative chromatic dispersion in the wavelength range. Each of the optical fibers 200, 300 has a chromatic dispersion whose absolute value is 5 ps/nm/km or more but 10 ps/nm/km or less in the wavelength range.

That is, as shown by graph G210 in the area (c) of Fig. 2, the first optical fiber 200 has a dispersion versus wavelength characteristic of an upwardly convex shape in the wavelength range. Specifically, the first optical fiber 200 has a positive chromatic dispersion of +5 ps/nm/km to +10 ps/nm/km in the wavelength range, and an optical property of 4 ps/nm/km or less in a difference between the maximum value and the minimum value of the chromatic dispersion in the wavelength range. On the other hand, as shown by graph G220 in the area (c) of Fig. 2, the second optical fiber 300 has a dispersion versus wavelength characteristic in a downwardly convex shape. Specifically, the second optical fiber 300 has a chromatic dispersion of -10 ps/nm/km or more but -5 ps/nm/km or less in the wavelength range, and an optical property of 4 ps/nm/km or less in a difference between the maximum value and the minimum value of the chromatic dispersion in the wavelength range. In order to reduce wavelength dependency in the chromatic dispersion, each of the first and second optical fibers 200, 300 preferably has a dispersion slope of 0.02 ps/nm$^2$/km or less in absolute value at the wavelength of 1550 nm.

As described above, the optical fiber transmission line 20 comprises the first and second optical fibers 200, 300 having chromatic dispersions different in polarity from each other. These first and second fibers 200, 300 have a larger chromatic dispersion as compared with that of conventional flattened fibers (substantially zero in a wavelength range for use), while they have a smaller chromatic dispersion as compared with that of standard single mode optical fibers (approximately 21 ps/nm/km at the wavelength of 1620 nm). The optical fiber transmission line 20 constructed by the first and second optical fibers 200, 300 performs characteristics of chromatic dispersion as shown in graph G230 in the area (c) of Fig. 2. Therefore, the optical transmission system including the optical fiber transmission line 20 having the aforementioned characteristics of chromatic dispersion can reduce distortion caused by an occurrence of the chromatic dispersion as compared with standard single mode optical fibers (accumulated chromatic dispersion viewed from the whole optical fiber transmission line is small), and can also reduce wavelength dependency of occurred chromatic dispersions, which enables usage as a wide-band WDM optical transmission system.

In addition, in the aforementioned first and second optical fibers 200, 300, in order to reduce further the wavelength dependency of the chromatic dispersion, a difference between the chromatic dispersion at the wavelength of 1460 nm (lower limit wavelength of the wavelength range) and that at the wavelength of 1620 nm (upper limit wavelength of the wavelength range) is preferably 1 ps/nm/km or less. In this case, the whole optical fiber transmission line 20 has a chromatic dispersion of 1 ps/nm/km or less in the range of 1460 nm to 1620 nm.

Further, as shown in the area (a) of Fig. 2, it is possible to construct the optical fiber transmission line 20 by a pair of the first and second optical fibers 200, 300 (line components), each of which may contain a plurality of line components having the same structure as that of such a line component. In this case, as shown in the area (b) of Fig. 2, the optical fiber transmission lien 20 may also be arranged such that first optical fibers 210, 220 contained in the plurality of line components are adjacent to each other, and that second optical fibers 310, 320 contained in the plurality of line components are adjacent to each other. In this case, deterioration of transmission characteristics caused by non-linear optical effects can be effectively suppressed by controlling the number of changes in polarity of the chromatic dispersion to be occurred along the longitudinal direction of the optical fiber transmission line 20.

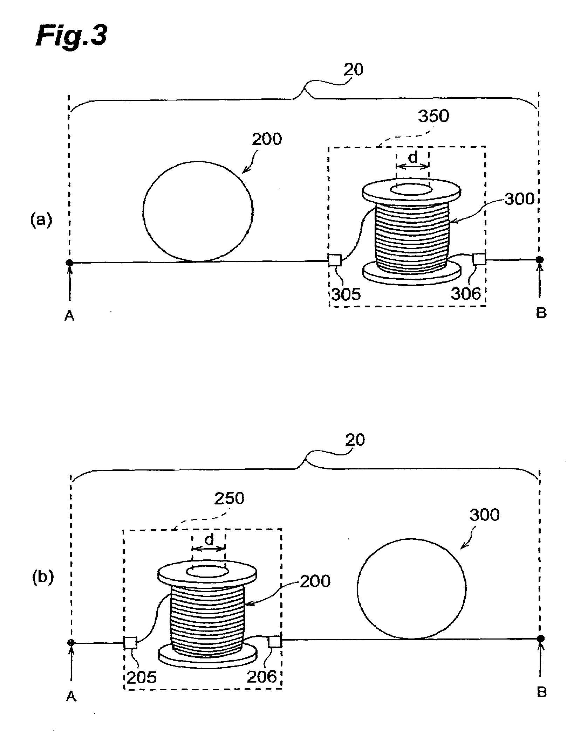

In the optical transmission system according to the present invention, as shown in Fig. 3, the optical fiber transmission line 20 may have a construction to function one of the first and second optical fibers 200, 300 as an optical transmission line and arrange the other on the transmission line to be provided as a module.

For example, the optical fiber transmission line 20 constructed by a fiber module 350 including the first optical fiber 200 and second optical fiber 300 is shown in the area (a) of Fig. 3. In the optical fiber transmission line 20 in the area (a) of Fig. 3, the fiber module 350 has a container for storing the second optical fiber 300 wound at a diameter d. This container is provided with a connector 305 for connecting optically a signal input end of the second optical fiber 300 and a signal output end of the first optical fiber 200, and a connector 306 for connecting optically a signal output end of the second optical fiber 300 and a signal input end of a receiving station 20.

On the other hand, an optical fiber transmission line 20 constructed by a fiber module 250 including a first optical fiber 200 and a second optical fiber 300 is shown in the area (b) of Fig. 3. In the optical fiber transmission line 20 in the area (b) of Fig. 3, the fiber module 250 has a container for storing the first optical fiber 200 wound at d in diameter. This container is provided with a connector 205 for connecting optically a signal input end of the first optical fiber 200 and a signal output end of a transmitting station, and a connector 206 for connecting optically a signal output end of the first optical fiber 200 and a signal input end of the second optical fiber 300.

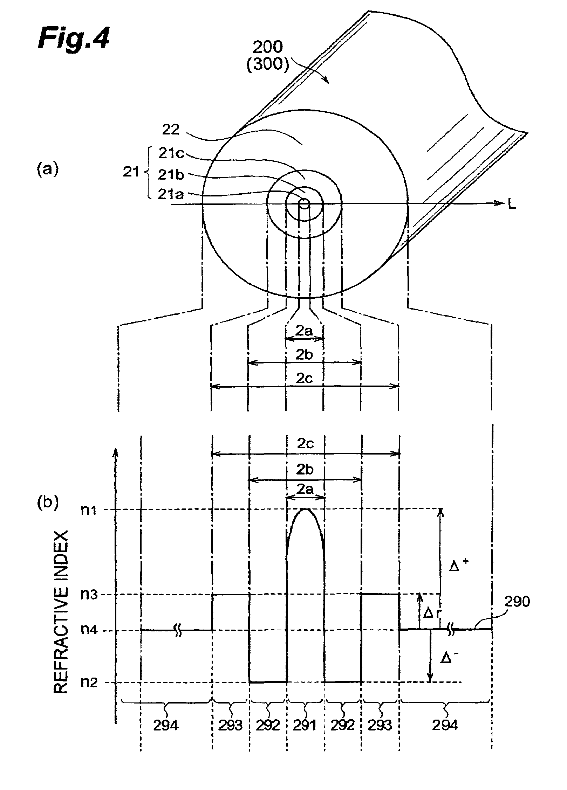

The aforementioned characteristics of chromatic dispersion can be performed by a refractive index profile as shown in the area (b) of Fig. 4.

Fig. 4 is a view illustrating a sectional structure from a typical structure of an optical fiber according to the present invention and its refractive index profile. As shown in the area (a) of Fig. 4, first and second optical fibers 200, 300 each have a core region 21, and a cladding region 22 provided on an outer periphery of the core region 21 and having a refractive index of $n_4$. In particular, the core region 21 comprises: a first core 21a extending along a predetermined axis, having an outer diameter 2a and having a refractive index $n_1$ (> $n_4$); a second core 21b provided on an outer periphery of the first core 21a, having an outer diameter 2b and having a refractive index $n_2$ (< $n_1$, $n_4$); and a third core 21c provided on an outer periphery of the first core 21 b, having an outer diameter 2c and having a refractive index $n_3$ (< $n_1$, > $n_2$, $n_4$).

For instance, when the cladding region 22 is provided as a reference region, a relative refractive index difference $\Delta^+$ of the first core 21a, a relative refractive index difference $\Delta^-$ of the second core 21b, and a relative refractive index difference $\Delta r$ of the third core 21c with respect to the cladding region 22 are provided with the following equations.

[Equation 2]

$$\Delta^+ \fallingdotseq (n_1 - n_4)/n_1 \times 100$$

$$\Delta^- \fallingdotseq (n_2 - n_4)/n_2 \times 100$$

$$\Delta r \fallingdotseq (n_3 - n_4)/n_3 \times 100$$

A refractive profile 290 of an optical fiber corresponding to each of the first and second optical fibers 200, 300 shown in the area (a) of Fig. 4 is shown in the area (b) of Fig. 4. In this refractive index profile 290, a region 291 represents a refractive index at each area on line L of the first core 21 a, a region 292 represents a refractive index at each area on line L of the first core 21b, a region 293 represents a refractive index at each area on line L of the third core 21c, and a region 294 represents a refractive index at each area on line L of the cladding region 22.

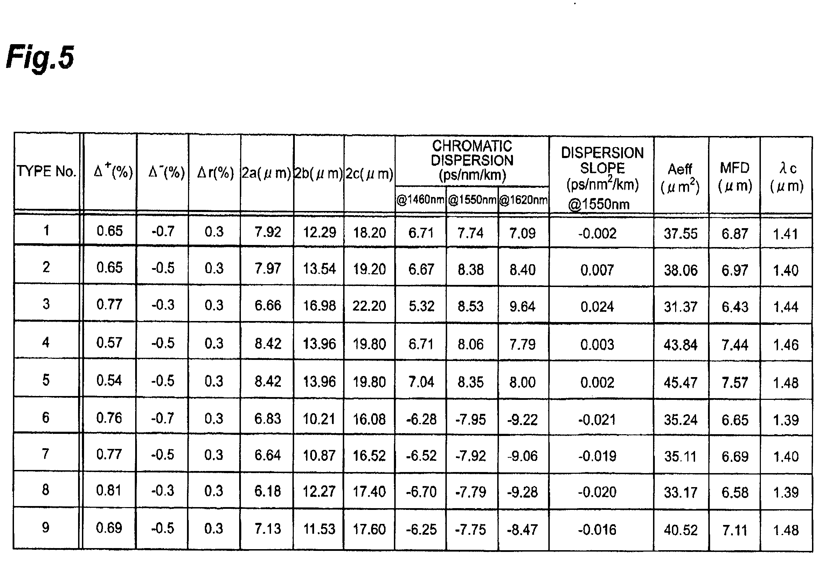

A sample of the optical fiber according to the present invention will next be described below. Fig. 5 is a table listing specifications for nine types of optical fibers as the samples for the optical fiber according to the present invention. In particular, optical fibers of Types 1 to 5 are samples for the first optical fiber 200 having a positive chromatic dispersion in the wavelength range of 1460 nm to 1620 nm, and optical fibers of Types 6 to 9 are samples for the second optical fiber 300 having a negative chromatic dispersion in the wavelength range. In addition, all the optical fibers of Types 1 to 9 corresponding to any one of the first and second optical fibers 200, 300 have a sectional structure and refractive index profile shown in Fig. 4.

(Type 1)

The optical fiber of Type 1 corresponds to the first optical fiber 200, the outer diameter 2a of the first core is 7.92 $\mu$m, the outer diameter 2b of the second core is 12.29 $\mu$m, and the outer diameter of the third core is 18.20 $\mu$m. With respect to the cladding region as a reference region, the relative refractive index difference $\Delta^+$ of the first core is 0.65 %, the relative refractive index difference $\Delta^-$ of the second core is -0.7 %, and the relative refractive index difference $\Delta r$ of the third core is 0.3 %. Further, for a variety of characteristics at the wavelength of 1550 nm, this optical fiber of Type 1 has a chromatic dispersion of 7.74 ps/nm/km, a dispersion slope of -0.002 ps/nm²/km, and an effective area $A_{eff}$ of 37.55 $\mu$m², and a mode field diameter MFD of 6.87 $\mu$m. Additionally, the optical fiber of Type 1 has the chromatic dispersions of 6.71 ps/nm/km and 7.09 ps/nm/km at the wavelengths of 1460 nm and 1630 nm, respectively. Then, the cutoff wavelength $\lambda c$ is 1.41 $\mu$m.

(Type 2)

The optical fiber of Type 2 corresponds to the first optical fiber 200, the outer diameter 2a of the first core is 7.97 $\mu$m, the outer diameter 2b of the second core is 13.54 $\mu$m, and the outer diameter of the third core is 19.20 $\mu$m. With respect to the cladding region as a reference region, the relative refractive index difference $\Delta^+$ of the first core is 0.65 %, the relative refractive index difference $\Delta^-$ of the second core is -0.5 %, and the relative refractive index difference $\Delta r$ of the third core is 0.3 %. Further, for a variety of characteristics at the wavelength of 1550 nm, this optical fiber of Type 2 has a chromatic dispersion of 8.38 ps/nm/km, a dispersion slope of 0.007 ps/nm$^2$/km, and an effective area $A_{eff}$ of 38.06 $\mu$m$^2$, and a mode field diameter MFD of 6.97 $\mu$m. Additionally, the optical fiber of Type 2 has the chromatic dispersions of 6.67 ps/nm/km and 8.40 ps/nm/km at the wavelengths of 1460 nm and 1630 nm, respectively. Then, the cutoff wavelength $\lambda$c is 1.40 $\mu$m.

(Type 3)

The optical fiber of Type 3 also corresponds to the first optical fiber 200, the outer diameter 2a of the first core is 6.66 $\mu$m, the outer diameter 2b of the second core is 16.98 $\mu$m, and the outer diameter of the third core is 22.20 $\mu$m. With respect to the cladding region as a reference region, the relative refractive index difference $\Delta^+$ of the first core is 0.77 %, the relative refractive index difference $\Delta^-$ of the second core is -0.3 %, and the relative refractive index difference $\Delta$r of the third core is 0.3 %. Further, for a variety of characteristics at the wavelength of 1550 nm, this optical fiber of Type 3 has a chromatic dispersion of 8.53 ps/nm/km, a dispersion slope of 0.024 ps/nm$^2$/km, and an effective area $A_{eff}$ of 31.37 $\mu$m$^2$, and a mode field diameter MFD of 6.43 $\mu$m. Additionally, the optical fiber of Type 3 has the chromatic dispersions of 5.32 ps/nm/km and 9.64 ps/nm/km at the wavelengths of 1460 nm and 1630 nm, respectively. Then, the cutoff wavelength $\lambda$c is 1.44 $\mu$m.

(Type 4)

The optical fiber of Type 4 also corresponds to the first optical fiber 200, the outer diameter 2a of the first core is 8.42 $\mu$m, the outer diameter 2b of the second core is 13.96 $\mu$m, and the outer diameter of the third core is 19.80 $\mu$m. With respect to the cladding region as a reference region, the relative refractive index difference $\Delta^+$ of the first core is 0.57 %, the relative refractive index difference $\Delta^-$ of the second core is -0.5 %, and the relative refractive index difference $\Delta$r of the third core is 0.3 %. Further, for a variety of characteristics at the wavelength of 1550 nm, this optical fiber of Type 4 has a chromatic dispersion of 8.06 ps/nm/km, a dispersion slope of 0.003 ps/nm$^2$/km, and an effective area $A_{eff}$ of 43.84 $\mu$m$^2$, and a mode field diameter MFD of 7.44 $\mu$m. Additionally, the optical fiber of Type 4 has the chromatic dispersions of 6.71 ps/nm/km and 7.79 ps/nm/km at the wavelengths of 1460 nm and 1630 nm, respectively. Then, the cutoff wavelength $\lambda_c$ is 1.46 $\mu$m.

(Type 5)

Further, the optical fiber of Type 5 also corresponds to the first optical fiber 200, the outer diameter 2a of the first core is 8.42 $\mu$m, the outer diameter 2b of the second core is 13.96 $\mu$m, and the outer diameter of the third core is 19.80 $\mu$m. With respect to the cladding region as a reference region, the relative refractive index difference $\Delta^+$ of the first core is 0.54 %, the relative refractive index difference $\Delta^-$ of the second core is -0.5 %, and the relative refractive index difference $\Delta$r of the third core is 0.3 %. Further, for a variety of characteristics at the wavelength of 1550 nm, this optical fiber of Type 5 has a chromatic dispersion of 8.35 ps/nm/km, a dispersion slope of 0.002 ps/nm$^2$/km, and an effective area $A_{eff}$ of 45.47 $\mu$m$^2$, and a mode field diameter MFD of 7.57 $\mu$m. Additionally, the optical fiber of Type 5 has the chromatic dispersions of 7.04 ps/nm/km and 8.00 ps/nm/km at the wavelengths of 1460 nm and 1630 nm, respectively. Then, the cutoff wavelength $\lambda$c is 1.48 $\mu$m.

(Type 6)

On the other hand, the optical fiber of Type 6 corresponds to the second optical fiber 300, the outer diameter 2a of the first core is 6.83 $\mu$m, the outer diameter 2b of the second core is 10.21 $\mu$m, and the outer diameter of the third core is 16.08 $\mu$m. With respect to the cladding region as a reference region, the relative refractive index difference $\Delta^+$ of the first core is 0.76 %, the relative refractive index difference $\Delta^-$ of the second core is -0.7 %, and the relative refractive index difference $\Delta$r of the third core is 0.3 %. Further, for a variety of characteristics at the wavelength of 1550 nm, this optical fiber of Type 6 has a chromatic dispersion of -7.95 ps/nm/km, a dispersion slope of -0.021 ps/nm$^2$/km, and an effective area $A_{eff}$ of 35.24 $\mu$m$^2$, and a mode field diameter MFD of 6.65 $\mu$m. Additionally, the optical fiber of Type 6 has the chromatic dispersions of -6.28 ps/nm/km and -9.22 ps/nm/km at the wavelengths of 1460 nm and 1630 nm, respectively. Then, the cutoff wavelength $\lambda$c is 1.39 $\mu$m.

(Type 7)

The optical fiber of Type 7 corresponds to the second optical fiber 300, the outer diameter 2a of the first core is 6.64 $\mu$m, the outer diameter 2b of the second core is 10.87 $\mu$m, and the outer diameter of the third core is 16.52 $\mu$m. With respect to the cladding region as a reference region, the relative refractive index difference $\Delta^+$ of the first core is 0.77 %, the relative refractive index difference $\Delta^-$ of the second core is -0.5 %, and the relative refractive index difference $\Delta r$ of the third core is 0.3 %. Further, for a variety of characteristics at the wavelength of 1550 nm, this optical fiber of Type 7 has a chromatic dispersion of -7.92 ps/nm/km, a dispersion slope of -0.019 ps/nm$^2$/km, and an effective area $A_{eff}$ of 35.11 $\mu$m$^2$, and a mode field diameter MFD of 6.69 $\mu$m. Additionally, the optical fiber of Type 7 has the chromatic dispersions of -6.52 ps/nm/km and -9.06 ps/nm/km at the wavelengths of 1460 nm and 1630 nm, respectively. Then, the cutoff wavelength $\lambda c$ is 1.40 $\mu$m.

(Type 8)

The optical fiber of Type 8 also corresponds to the second optical fiber 300, the outer diameter 2a of the first core is 6.18 $\mu$m, the outer diameter 2b of the second core is 12.27 $\mu$m, and the outer diameter of the third core is 17.40 $\mu$m. With respect to the cladding region as a reference region, the relative refractive index difference $\Delta^+$ of the first core is 0.81 %, the relative refractive index difference $\Delta^-$ of the second core is -0.3 %, and the relative refractive index difference $\Delta r$ of the third core is 0.3 %. Further, for a variety of characteristics at the wavelength of 1550 nm, this optical fiber of Type 8 has a chromatic dispersion of -7.79 ps/nm/km, a dispersion slope of -0.020 ps/nm$^2$/km, and an effective area $A_{eff}$ of 33.17 $\mu$m$^2$, and a mode field diameter MFD of 6.58 $\mu$m. Additionally, the optical fiber of Type 8 has the chromatic dispersions of -6.70 ps/nm/km and -9.28 ps/nm/km at the wavelengths of 1460 nm and 1630 nm, respectively. Then, the cutoff wavelength $\lambda c$ is 1.39 $\mu$m.

(Type 9)

Then, the optical fiber of Type 9 also corresponds to the second optical fiber 300, the outer diameter 2a of the first core is 7.13 $\mu$m, the outer diameter 2b of the second core is 11.53 $\mu$m, and the outer diameter of the third core is 17.60 $\mu$m With respect to the cladding region as a reference region, the relative refractive index difference $\Delta^+$ of the first core is 0.69 %, the relative refractive index difference $\Delta^-$ of the second core is -0.5 %, and the relative refractive index difference $\Delta r$ of the third core is 0.3 %. Further, for a variety of characteristics at the wavelength of 1550 nm, this optical fiber of Type 9 has a chromatic dispersion of -7.75 ps/nm/km, a dispersion slope of -0.016 ps/nm$^2$/km, and an effective area $A_{eff}$ of 40.52 $\mu$m$^2$, and a mode field diameter MFD of 7.11 $\mu$m. Additionally, the optical fiber of Type 9 has the chromatic dispersions of -6.25 ps/nm/km and -8.47 ps/nm/km at the wavelengths of 1460 nm and 1630 nm, respectively. Then, the cutoff wavelength $\lambda c$ is 1.48 $\mu$m.

As described above, in the optical fibers of Types 1 to 9, the relative refractive index difference $\Delta^-$ of the second core 21b with respect to the cladding region 22 is -0.7 % or more but -0.3 % or less. In addition, an effective area $A_{eff}$ of 43 $\mu$m$^2$ or more is provided at the wavelength of 1550 nm, and the relative refractive index difference $\Delta^+$ of the first core 21 a with respect to the cladding region 22 is 0.5 % or more but 0.6 % or less. Additionally, for other characteristics, these optical fibers of Types 1 to 9 each have a transmission loss of 0.21 dB/km or less, a micro-bending loss of 10 dB/m or less when it is bent at a diameter of 20 mm, and a polarization mode dispersion of 0.25 dB $\cdot$ km$^{-1/2}$ or less at the wavelength of 1550 nm.

Though an optical fiber transmission line applicable to the optical transmission system according to the present invention can be constructed by a line component unit that comprises a pair of first and second optical fibers having the aforementioned structure, this optical fiber transmission line may include a plurality of line components each having the same structure as that of the above-described line component. In this case, the first optical fiber 200 included in each of the plurality of line components preferably has a mode field diameter of 7.5 $\mu$m to 8.5 $\mu$m in the above-described wavelength range. Thus, deterioration of transmission characteristics caused by non-linear optical effects is effectively suppressed since it is possible to reduce an optical power density of propagating signal light.

**INDUSTRIAL APPLICABILITY**

In wavelength division multiplexing optical communication, the invention is applied to an optical transmission system that enables to reduce variations between wavelengths in chromatic dispersion over a wide wavelength range, and suppress non-linear optical effects.

**Claims**

**1.** An optical fiber having a core region and a cladding region arranged so as to obtain:

a chromatic dispersion whose absolute value is 5 ps/nm/km or more but 10 ps/nm/km or less in a wavelength range of 1460 nm to 1620 nm; and

an optical property of 4ps/nm/km or less in a difference between a maximum value and a minimum value of the chromatic dispersion in the wavelength range.

2. An optical fiber according to claim 1, wherein the chromatic dispersion in the wavelength range of 1460 nm to 1620 nm is +5 ps/nm/km or more but +10 ps/nm/km or less.

3. An optical fiber according to claim 1, wherein the chromatic dispersion in the wavelength range of 1460 nm to 1620 nm is -10 ps/nm/km or more but -5 ps/nm/km or less.

4. An optical fiber according to any one of claims 1 to 3, wherein a difference between the chromatic dispersion at a wavelength of 1460 nm and the chromatic dispersion at a wavelength of 1620 nm is 1 ps/nm/km or less.

5. An optical fiber according to any one of claims 1 to 3, wherein said core region includes: a first core extending along a predetermined axis, said first core region having an outer diameter 2a and a maximum refractive index $n_1$; a second core provided on an outer periphery of said first core, said second core region having an outer diameter 2b and a refractive index $n_2$ lower than that of said first core; and a third core provided on an outer periphery of said second core, said third core region having an outer diameter 2c and a refractive index $n_3$ higher than that of said second core, and
wherein said cladding region is provided on an outer periphery of said third core and has a refractive index $n_4$ lower than that of said third core.

6. An optical fiber according to claim 5, wherein a relative refractive index difference $\Delta^-$ of said second core with respect to said cladding region is -0.3 % or less.

7. An optical fiber according to claim 6, wherein a relative refractive index difference $\Delta^-$ of said second core with respect to said cladding region is -0.7 % or more.

8. An optical fiber according to claim 2, wherein said core region includes: a first core extending along a predetermined axis, said first core region having an outer diameter 2a and a maximum refractive index $n_1$; a second core provided on an outer periphery of said first core, said second core region having an outer diameter 2b and a refractive index $n_2$ lower than that of said first core; and a third core provided on an outer periphery of said second core, said third core region having an outer diameter 2c and a refractive index $n_3$ higher than that of said second core, and said cladding region being provided on an outer periphery of said third core and having a refractive index $n_4$ lower than that of said third core,
wherein said optical fiber further has an effective area of 43 $\mu m^2$ or more at a wavelength of 1550 nm, and
wherein a relative refractive index difference $\Delta^+$ of said first core with respect to said cladding region is 0.5 % or more but 0.6 % or less.

9. An optical fiber according to claim 3, wherein said core region includes: a first core extending along a predetermined axis, said first core region having an outer diameter 2a and a maximum refractive index $n_1$; a second core provided on an outer periphery of said first core, said second core region having an outer diameter 2b and a refractive index $n_2$ lower than that of said first core; and a third core provided on an outer periphery of said second core, said third core region having an outer diameter 2c and a refractive index $n_3$ higher than that of said second core, and said cladding region being provided on an outer periphery of said third core and having a refractive index $n_4$ lower than that of said third core,
wherein said optical fiber further has an effective area of 35 $\mu m^2$ or more at a wavelength of 1550 nm, and
wherein a relative refractive index difference $\Delta^+$ of said first core with respect to said cladding region is 0.65 % or more but 0.80 % or less.

10. An optical fiber according to any one of claims 1 to 3, further having a mode field diameter of 7.5$\mu$m to 8.5 $\mu$m at a wavelength of 1550 nm.

11. An optical transmission system comprising:

a first optical fiber having a chromatic dispersion whose absolute value is 5 ps/nm/km or more but 10 ps/nm/km or less in a wavelength range of 1460 nm to 1620 nm, and having an optical property of 4 ps/nm/km or less in a difference between a maximum value and a minimum value of the chromatic dispersion in the wavelength range; a second optical fiber optically connected with said first optical fiber, said second optical fiber having a chromatic dispersion with a inverse sign to said first optical fiber in the wavelength range.

12. An optical transmission system according to claim 11, wherein said first optical fiber has a chromatic dispersion of +5 ps/nm/km or more but +10 ps/nm/km or less in the wavelength range of 1460 nm to 1620 nm, and said second optical fiber has a negative chromatic dispersion in the wavelength range.

13. An optical transmission system according to claim 11, wherein said first optical fiber has a chromatic dispersion of -10 ps/nm/km or more but -5 ps/nm/km or less in the wavelength range and an optical property of 4 ps/nm/km or less in a difference between a maximum value and a minimum value of the chromatic dispersion of said second optical fiber in the wavelength range, and
wherein said second optical fiber has a positive chromatic dispersion in the wavelength range of 1460 nm to 1620 nm.

14. An optical fiber transmission line comprising one or more line components each including a first optical fiber and a second optical fiber,
wherein said first optical fiber has a chromatic dispersion of +5 ps/nm/km or more but +10 ps/nm/km or less in a wavelength range of 1460 nm to 1620 nm, and a dispersion slope whose absolute value is 0.02 ps/nm$^2$/km or less, and
wherein said second optical fiber has a chromatic dispersion of -10 ps/nm/km or more but -5 ps/nm/km or less in the wavelength range, and a dispersion slope whose absolute value is 0.02 ps/nm$^2$/km or less, and further has an optical property of 4 ps/nm/km or less in a difference between a maximum value and a minimum value of the chromatic dispersion at a wavelength of 1550 nm.

15. An optical fiber transmission line according to claim 14,
wherein said first optical fiber has a dispersion versus wavelength characteristic of an upwardly convex shape, and said second optical fiber has a dispersion versus wavelength characteristic of an downwardly convex shape.

16. An optical fiber transmission line according to claim 14,
wherein said first optical fiber included in each of said line components has a mode field diameter of 7.5 μm to 8.5 μm at the wavelength of 1550 nm.

17. An optical fiber transmission line according to claim 16,
wherein said first optical fibers included in said line components are arranged so as to be adjacent to each other, and said second optical fibers included in said line components are arranged so as to be adjacent to each other.

18. An optical fiber transmission line comprising: a first optical fiber having a dispersion versus wavelength characteristic of an upwardly convex shape and a positive chromatic dispersion, and a second optical fiber having a dispersion versus wavelength characteristic of an downwardly convex shape and a negative chromatic dispersion, thereby having a chromatic dispersion whose absolute value is I ps/nm/km or less in the wavelength range of 1460 nm to 1620 nm.

*Fig.1*

# Fig.2

(a)

(b)

(c)

## Fig.3

(a)

(b)

# *Fig.4*

## Fig.5

| TYPE No. | $\Delta^+$(%) | $\Delta^-$(%) | $\Delta r$(%) | 2a($\mu$m) | 2b($\mu$m) | 2c($\mu$m) | CHROMATIC DISPERSION (ps/nm/km) | | | DISPERSION SLOPE (ps/nm²/km) @1550nm | Aeff ($\mu$m²) | MFD ($\mu$m) | $\lambda$c ($\mu$m) |
|---|---|---|---|---|---|---|---|---|---|---|---|---|---|
| | | | | | | | @1460nm | @1550nm | @1620nm | | | | |
| 1 | 0.65 | -0.7 | 0.3 | 7.92 | 12.29 | 18.20 | 6.71 | 7.74 | 7.09 | -0.002 | 37.55 | 6.87 | 1.41 |
| 2 | 0.65 | -0.5 | 0.3 | 7.97 | 13.54 | 19.20 | 6.67 | 8.38 | 8.40 | 0.007 | 38.06 | 6.97 | 1.40 |
| 3 | 0.77 | -0.3 | 0.3 | 6.66 | 16.98 | 22.20 | 5.32 | 8.53 | 9.64 | 0.024 | 31.37 | 6.43 | 1.44 |
| 4 | 0.57 | -0.5 | 0.3 | 8.42 | 13.96 | 19.80 | 6.71 | 8.06 | 7.79 | 0.003 | 43.84 | 7.44 | 1.46 |
| 5 | 0.54 | -0.5 | 0.3 | 8.42 | 13.96 | 19.80 | 7.04 | 8.35 | 8.00 | 0.002 | 45.47 | 7.57 | 1.48 |
| 6 | 0.76 | -0.7 | 0.3 | 6.83 | 10.21 | 16.08 | -6.28 | -7.95 | -9.22 | -0.021 | 35.24 | 6.65 | 1.39 |
| 7 | 0.77 | -0.5 | 0.3 | 6.64 | 10.87 | 16.52 | -6.52 | -7.92 | -9.06 | -0.019 | 35.11 | 6.69 | 1.40 |
| 8 | 0.81 | -0.3 | 0.3 | 6.18 | 12.27 | 17.40 | -6.70 | -7.79 | -9.28 | -0.020 | 33.17 | 6.58 | 1.39 |
| 9 | 0.69 | -0.5 | 0.3 | 7.13 | 11.53 | 17.60 | -6.25 | -7.75 | -8.47 | -0.016 | 40.52 | 7.11 | 1.48 |

# EP 1 653 640 A1

**INTERNATIONAL SEARCH REPORT**

| International application No. |
|---|
| PCT/JP2004/009840 |

**A. CLASSIFICATION OF SUBJECT MATTER**
    Int.Cl⁷ G02B6/22, H04B10/18

According to International Patent Classification (IPC) or to both national classification and IPC

**B. FIELDS SEARCHED**

Minimum documentation searched (classification system followed by classification symbols)
    Int.Cl⁷ G02B6/00-6/54, H04B10/00-10/28

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)
    WPI(DIALOG), INSPEC(DIALOG), JOIS(JICST FILE)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-98373 A (Alcatel),<br>03 April, 2003 (03.04.03),<br>Par. Nos. [0047] to [0050], [0075];<br>Figs. 2, 4, 5<br>& EP 1288685 A1          & FR 2828939 A<br>& US 2003/0081921 A1 | 1,2,4-8,10<br>11,12,14-18 |
| X<br><br>Y | Molin, D. et al., Ultra-Low Slope Medium-<br>Dispersion Fiber for Wide-Band Transmissions.<br>Optical Fiber Communications Conference (OFC<br>2003), March, 2003, Vol.1, pages 150 to 151 | 1,2,5-8,<br>10-12<br>14-18 |

☒ Further documents are listed in the continuation of Box C.          ☐ See patent family annex.

| | |
|---|---|
| *    Special categories of cited documents:<br>"A"  document defining the general state of the art which is not considered<br>     to be of particular relevance<br>"E"  earlier application or patent but published on or after the international<br>     filing date<br>"L"  document which may throw doubts on priority claim(s) or which is<br>     cited to establish the publication date of another citation or other<br>     special reason (as specified)<br>"O"  document referring to an oral disclosure, use, exhibition or other means<br>"P"  document published prior to the international filing date but later than<br>     the priority date claimed | "T"  later document published after the international filing date or priority<br>     date and not in conflict with the application but cited to understand<br>     the principle or theory underlying the invention<br>"X"  document of particular relevance; the claimed invention cannot be<br>     considered novel or cannot be considered to involve an inventive<br>     step when the document is taken alone<br>"Y"  document of particular relevance; the claimed invention cannot be<br>     considered to involve an inventive step when the document is<br>     combined with one or more other such documents, such combination<br>     being obvious to a person skilled in the art<br>"&"  document member of the same patent family |

| Date of the actual completion of the international search<br>    02 August, 2004 (02.08.04) | Date of mailing of the international search report<br>    17 August, 2004 (17.08.04) |
|---|---|
| Name and mailing address of the ISA/<br>    Japanese Patent Office | Authorized officer |
| Facsimile No. | Telephone No. |

Form PCT/ISA/210 (second sheet) (January 2004)

## INTERNATIONAL SEARCH REPORT

<table>
<tr><td colspan="2"></td><td>International application No.<br>PCT/JP2004/009840</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| X<br><br>Y | Naomi KUMANO et al., "Cho Kotaiiki Denso Kano na Bunsan Slope Zero no NZ-DSF no Kaihatsu", 2003 Nen The Institute of Electronics, Information and Communication Engineers Sogo Taikai Koen Ronbunshu, Electronics 1, 03 March, 2003 (03.03.03), page 181, (Koen Bango C-3-41) | 1,2,4-8,<br>10-12<br>14-18 |
| Y | Kazunori TAKEKASA et al., "Bunsan Yokuseigata MDF(MDF$^{SD}$) o Mochiita 40Gb/s Densoyo Bunsan Management Senro, 2002 Nen The Institute of Electronics, Information and Communication Engineers Sogo Taikai Koen Ronbunshu, Electronics 1, 07 March, 2002 (07.03.02), page 225, (Koen Bango C-3-93) | 1-18 |
| Y | JP 2003-188822 A (The Furukawa Electric Co., Ltd.), 04 July, 2003 (04.07.03), Par. Nos. [0030], [0031], [0051], [0060], [0066], [0070] to [0072], [0079] to [0084], [0106] to [0114]; Figs. 5, 10, 11, 13 & US 2003/123826 A1 | 1-18 |
| Y | Naomi KUMANO et al., "Chotei Bunsan Slope-gata NZ-DSF no Kaihatsu", The Institute of Electronics, Information and Communication Engineers Gijutsu Kenkyu Hokoku, Vol.102, No.269 (OFT2002-18-32), 15 August, 2002 (15.08.02), pages 23 to 28 | 1-18 |
| Y | JP 2002-365462 A (The Furukawa Electric Co., Ltd.), 18 December, 2002 (18.12.02), Par. No. [0008]; Figs. 1 to 6 & EP 1267504 A3 & US 2003/0081889 A1 | 1-18 |
| X<br>Y | WO 2000/63732 A (Sumitomo Electric Industries, Ltd.), 26 October, 2000 (26.10.00), Full text; Figs. 7 to 10 & US 2001/0019651 A1 & EP 1186919 A1 | 1-3,10-18<br>4-9 |
| P,X<br>P,Y | JP 2003-255169 A (The Furukawa Electric Co., Ltd.), 10 September, 2003 (10.09.03), Full text; Fig. 4 & US 2003/210878 A1 | 1,2,10<br>4,11,12,<br>14-18 |

Form PCT/ISA/210 (continuation of second sheet) (January 2004)

**INTERNATIONAL SEARCH REPORT**

| International application No. |
| --- |
| PCT/JP2004/009840 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | JP 2001-311848 A  (Sumitomo Electric Industries,<br>Ltd.),<br>09 November, 2001 (09.11.01),<br>Full text; Figs. 1, 5<br>& EP 1111414 A2        & EP 1109039 A2<br>& US 2001/0006572 A1    & US 2001/0010746 A1<br>& US 2001/0019653 A1 | 1,3,4-10<br>11-18 |
| X<br>Y | JP 2001-166173 A  (Sumitomo Electric Industries,<br>Ltd.),<br>22 June, 2001 (22.06.01),<br>Full text; Fig. 5<br>& EP 1111414 A2        & EP 1109039 A2<br>& US 2001/0006572 A1    & US 2001/0010746 A1<br>& US 2001/0019653 A1    & US 2001/0019653 A1 | 1,3<br>4-18 |
| X<br><br>Y | Provost, L. et al., Dispersion-Managed Fiber<br>with Low Chromatic Dispersion Slope., Optical<br>Fiber Communications Conference (OFC 2003),<br>March, 2003, Vol.1, pages 151 to 153 | 1,3,5-7,<br>9-11,13<br>14-18 |
| Y | JP 11-506228 A  (Corning Inc.),<br>02 June, 1999 (02.06.99),<br>Full text; Fig. 5a<br>& WO 1997/33188 A       & EP 990182 A<br>& US 5684909 A | 11,13-18 |
| Y | JP 58-168004 A  (Western Electronic Co., Inc.),<br>04 October, 1983 (04.10.83),<br>Full text; Fig. 5<br>& FR 2523316 A          & DE 3307874 A<br>& GB 2116744 A | 11,13-18 |
| X<br>Y | JP 2002-518988 A  (Corning Inc.),<br>25 June, 2002 (25.06.02),<br>Full text; Fig. 3<br>& EP 850431 A          & WO 1998/00739 A | 1,3,5-10<br>11,13 |
| P,X<br>P,Y | JP 2004-54291 A  (Alcatel),<br>19 February, 2004 (19.02.04),<br>Full text; Figs. 2, 21, 22<br>& EP 1382981 A1        & US 2004/0013381 A1<br>& FR 2842610 A1 | 1-3,5-18<br>4 |

Form PCT/ISA/210 (continuation of second sheet) (January 2004)

## INTERNATIONAL SEARCH REPORT

| International application No. |
|---|
| PCT/JP2004/009840 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

A matter common to claims 1-17 is "a fiberoptics having an absolute wavelength dispersion value of at least 5 ps/nm/km and up to 10 ps/nm/km in a 1460-1620 nm wavelength band, and having the difference, between the maximum value and the minimum value of a wavelength dispersion, of up to 4 ps/nm/km in that wavelength band". However, the common matter is not a special technical feature within the meaning of PCT Rule 13.2, second sentence, since it is publicly known and makes no contribution over the prior art. Therefore, there exists no special technical matter common to all the claims 1-17. In addition, claim 18 has not the above common matter. Accordingly, claims 1-18 do not clearly fulfill the unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest.

☐ No protest accompanied the payment of additional search fees.

Form PCT/ISA/210 (continuation of first sheet (2)) (January 2004)